# FASCICULE DE BREVET EUROPEEN

(11) **EP 2 129 891 B1**
(45) Date de publication et mention de la délivrance du brevet: **20.07.2011**
(21) Numéro de dépôt: 07871832.7
(22) Date de dépôt: 11.12.2007
(51) Int. Cl.: F02B 37/013, F02B 37/18, F02M 25/07

(54) **MOTEUR A COMBUSTION INTERNE SURALIMENTE**
AUFGELADENER VERBRENNUNGSMOTOR
SUPERCHARGED INTERNAL COMBUSTION ENGINE

(30) Priorité: 11.12.2006 FR 0610774
(43) Date de publication de la demande: 09.12.2009
(60) Demande divisionnaire: 11167321.6
(73) Titulaire: Melchior, Jean Frédéric, 75006 Paris (FR)
(72) Inventeur: Melchior, Jean Frédéric, 75006 Paris (FR)
(74) Mandataire: Ramey, Daniel
(86) Numéro de dépôt international: PCT/FR2007/002037
(87) Numéro de publication internationale: WO 2008/090273

(56) Documents cités:
- EP-A- 0 701 048
- WO-A-99/31374
- WO-A-2006/082302
- DE-A1- 10 062 169
- DE-A1- 10 222 919
- GB-A- 2 059 515
- GB-A- 2 353 328
- JP-A- 4 058 056
- US-A1- 2006 042 247

## Description

L'invention concerne un moteur à combustion interne à quatre temps suralimenté à turbocompresseur, en particulier pour véhicule automobile, ce moteur à pistons alternatifs comprenant un collecteur d'admission alimenté en air sous pression par un compresseur entraîné par une turbine elle-même alimentée par une fraction au moins des gaz d'échappement du moteur, une autre fraction de ces gaz d'échappement pouvant être recyclée dans le collecteur d'admission pour réduire les émissions d'oxydes d'azote NOx.

L'invention concerne, plus particulièrement, un moteur du type précité à deux étages de turbocompression, comprenant un compresseur basse-pression et un compresseur haute-pression montés en série pour alimenter le moteur en air comprimé, et entraînés respectivement par une turbine haute-pression et par une turbine basse-pression, qui sont montées en série et alimentées par les gaz d'échappement du moteur.

Dans un tel moteur, la turbine haute-pression est dimensionnée pour les faibles vitesses de rotation du moteur, afin d'améliorer la turbocompression à ces vitesses. Un conduit de dérivation équipé d'une vanne réglable est branché entre l'entrée et la sortie de la turbine haute-pression et permet, pour les vitesses de rotation plus élevées du moteur, de décharger un débit excédentaire de gaz d'échappement directement à l'entrée de la turbine basse pression, qui est dimensionnée plus largement.

Toutefois, cette décharge de gaz d'échappement à l'entrée de la turbine basse pression augmente la pression entre les turbines et diminue le taux de détente et le débit de la turbine haute-pression. Cela augmente également le taux de détente de la turbine basse pression. Au-delà d'un certain taux de dérivation des gaz d'échappement, la puissance fournie par la turbine haute-pression n'est plus suffisante pour entraîner le compresseur associé à cette turbine.

On connaît, par le document WO 99/31374-A1, un moteur suralimenté dont le collecteur d'échappement comprend une sortie reliée à l'entrée d'une turbine et une autre sortie reliée au collecteur d'admission par un conduit de recyclage des gaz d'échappement. Cette autre sortie est ouverte à l'ouverture des orifices d'échappement des cylindres et fermée avant la fermeture de ces orifices d'échappement. Cela ne permet pas d'alimenter la turbine à haute pression au début de la vidange des cylindres.

La présente invention a notamment pour but d'éviter les inconvénients de la technique antérieure.

Elle a également pour but de réduire la pression des gaz en aval du moteur pendant les phases d'échappement pour améliorer le rendement des moteurs à quatre temps.

Elle a encore pour but d'augmenter le taux de gaz d'échappement recyclés ou de diminuer la richesse de la combustion dans le moteur.

Elle propose, à cet effet, un moteur à combustion interne suralimenté à turbocompresseur, comprenant un collecteur d'échappement dont une sortie est reliée à l'entrée d'une turbine entraînant un compresseur d'alimentation du moteur en air sous pression, caractérisé en ce que le collecteur d'échappement comprend au moins une seconde sortie équipée de moyens d'obturation actionnés en synchronisme avec la rotation du vilebrequin du moteur pour fermer cette seconde sortie lors de l'ouverture des orifices d'échappement des cylindres du moteur et pour l'ouvrir avant la fermeture desdits orifices d'échappement.

Ainsi, dans le moteur selon l'invention, une partie initiale de la masse de gaz émise par chaque cylindre alimente à haute pression la turbine pendant une première fraction de la période de vidange du cylindre, et le reste de cette masse de gaz est partagé à basse pression entre la turbine et la seconde sortie du collecteur d'échappement.

Avantageusement, la seconde sortie du collecteur d'échappement est reliée au collecteur d'admission du moteur par un conduit de recyclage de gaz d'échappement

Selon une autre caractéristique de l'invention, le collecteur d'échappement comprend une troisième sortie reliée à la sortie de la turbine précitée par un conduit de dérivation équipé d'une soupape de régulation de débit.

La sortie de ce conduit de dérivation peut alimenter une turbine basse-pression qui entraîne un compresseur basse-pression monté en série avec le compresseur précité qui est un compresseur haute-pression. la turbine basse pression étant alimentée en gaz d'échappement par la turbine précitée (qui est une turbine haute-pression) et par la vanne de régulation du conduit de dérivation.

On peut ainsi maintenir une forte contre-pression en aval du moteur quand les pistons sont au voisinage de leur point mort bas et ramener cette contre-pression à un niveau voisin de la pression d'admission pendant les courses de refoulement des pistons. Cela permet d'alimenter la turbine haute-pression à une pression supérieure à la pression d'admission sans créer de fortes pertes de rendement par pompage pendant les transvasements de gaz.

Selon une autre caractéristique de l'invention, l'ouverture du second orifice de sortie du collecteur d'échappement par les moyens d'obturation précités a lieu à 60° environ de rotation du vilebrequin après l'ouverture des orifices d'échappement, et la durée de la fermeture de ce second orifice est avantageusement réglable.

Dans ces conditions, une partie initiale de la masse de gaz émise par chaque cylindre alimente à haute pression la turbine haute-pression et la soupape de régulation du conduit de dérivation relié à la turbine basse-pression pendant le premier tiers de la vidange du cylindre et le reste de cette masse de gaz alimente à basse pression, en parallèle, à la fois la turbine haute-pression, le conduit de recyclage de gaz d'échappement et le conduit de dérivation relié à la turbine basse-pression, pendant le reste de la période de vidange du cylindre.

Comme un seul cylindre peut être vidangé par demi-tour du vilebrequin, l'invention est limitée à quatre cylindres par turbine pour un moteur à quatre temps.

Le volume du conduit de recyclage doit être suffisant pour accueillir la bouffée de gaz qui suit sa mise en communication avec le collecteur d'échappement et en renvoyer une partie vers les turbines en fin d'évacuation du cylindre.

Les moyens d'obturation de la seconde sortie du collecteur d'échappement peuvent comprendre un boisseau ou un disque rotatif entraîné à une vitesse de rotation double de celle du vilebrequin du moteur (dans le cas d'un moteur à quatre cylindres et à quatre temps), ce qui permet une fermeture et une ouverture très rapides de cette seconde sortie, ou de préférence une ou plusieurs soupapes actionnées par des cames à quatre lobes (dans le cas d'un moteur à 4 cylindres et à 4 temps) de l'arbre à cames commandant les soupapes d'échappement des cylindres reliés au collecteur d'échappement.

Pour augmenter la vitesse d'ouverture des orifices d'échappement, il est avantageux que les têtes des soupapes d'échappement soient encastrées dans la culasse du moteur dans leur position de fermeture des orifices d'échappement, ce qui permet d'accélérer les soupapes avant l'ouverture effective des orifices d'échappement.

Pour assurer un transfert rapide de la détente des gaz d'échappement entre les orifices d'échappement et la section critique de la turbine haute-pression, il est avantageux que le volume du collecteur d'échappement soit petit par rapport à la cylindrée unitaire et par exemple inférieur à 30% du volume d'un cylindre du moteur.

Pour réduire à un minimum la pression en aval du moteur pendant le recyclage des gaz d'échappement vers le collecteur d'admission, ce qui permet d'optimiser le rendement du moteur, il est avantageux que le conduit de recyclage des gaz d'échappement soit largement dimensionné et comprenne une vanne de réglage pour réduire le taux de gaz recyclés. Cette vanne doit être placée à l'entrée du conduit de recyclage afin de réduire à un minimum le volume en amont des turbines quand elle est fermée.

Selon une variante de réalisation de l'invention, le collecteur d'échappement est un conduit formé de fonderie à l'intérieur de la culasse du moteur et qui s'étend le long d'une rangée de soupapes d'échappement. Ce conduit comporte à chacune de ses extrémités une sortie reliée à un conduit de recyclage des gaz d'échappement et équipée d'une soupape de fermeture et d'ouverture de sa liaison au conduit de recyclage, cette soupape et les soupapes d'échappement des cylindres reliées au collecteur d'échappement étant commandées par un même arbre à cames.

Ce collecteur d'échappement comprend également une première sortie intermédiaire reliée à l'entrée d'une turbine haute pression. Quand il existe une turbine basse pression, le collecteur comprend une seconde sortie intermédiaire reliée à l'entrée de cette turbine basse pression par l'intermédiaire d'une vanne réglable.

Pour régulariser l'écoulement très pulsé des gaz d'échappement par ces deux sorties intermédiaires, il est avantageux de les faire débiter dans une ou deux chambres de centrifugation équipées d'un diffuseur radial annulaire.

Une telle chambre de centrifugation associée à un diffuseur radial est déjà décrite dans le document WO 2006/082302-A1 du demandeur. Elle permet notamment de transformer l'écoulement pulsé en écoulement à pression sensiblement constante, intermédiaire entre la pression maximale et la pression minimale de pulsation. Cet écoulement à pression constante est plus favorable pour alimenter une turbine, un catalyseur ou un filtre à particules.

La sortie de la turbine haute-pression peut être reliée à une entrée axiale de la chambre de centrifugation, qui est par ailleurs alimentée par le collecteur d'échappement par l'intermédiaire d'une tuyère de détente réglable qui débouche tangentiellement dans la chambre de centrifugation.

Un catalyseur d'oxydation et un filtre à particules, qui sont cylindriques à écoulement axial, sont avantageusement montés entre la sortie du diffuseur radial et l'entrée de la turbine basse-pression.

L'invention propose également un procédé de commande du taux de recyclage de gaz d'échappement et de la richesse de combustion dans un moteur du type décrit ci-dessus, ce moteur comprenant un collecteur d'échappement dont une sortie alimente au moins une turbine, dont une deuxième sortie est sélectivement reliée par des moyens d'obturation à un conduit de recyclage de gaz d'échappement dont l'entrée est équipée d'une vanne de réglage, et dont une troisième sortie est reliée à la sortie de la turbine par un conduit de dérivation équipé d'une vanne de régulation de débit, ce procédé étant caractérisé en ce qu'il consiste, le conduit de recyclage de gaz d'échappement étant complètement ouvert, à réduire le taux de gaz d'échappement recyclés par ouverture de ladite vanne de régulation et, si nécessaire, la vanne de régulation étant à pleine ouverture, à fermer le conduit de recyclage au moyen de la vanne de réglage.

Une ouverture de la vanne de régulation du conduit de dérivation se traduit en effet par une augmentation du volume d'air amené au collecteur d'admission et par une diminution du volume de gaz d'échappement recyclés vers le collecteur d'admission. Si cela ne suffit pas, la fermeture de la vanne de réglage du conduit de recyclage permet d'augmenter encore le débit d'air fourni au moteur en augmentant la pression d'alimentation des turbines.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un moteur à quatre cylindres suralimenté selon l'invention ;
- la figure 2 est une vue schématique partielle en coupe d'une soupape d'échappement dans ses deux positions extrêmes de fermeture et d'ouverture ;
- la figure 3 représente les diagrammes d'ouverture de la soupape de la figure 2 et d'une soupape classique ;
- la figure 4 est une vue schématique partielle d'une variante de l'invention appliquée à un moteur à trois cylindres ;
- la figure 5 est une vue schématique en perspective du collecteur d'échappement, des soupapes d'échappement et de leur arbre à cames, selon la variante de la figure 4 ;
- les figures 6 et 7 sont des vues schématiques agrandies en coupe illustrant la commande des soupapes de recyclage par des cames à quatre lobes.

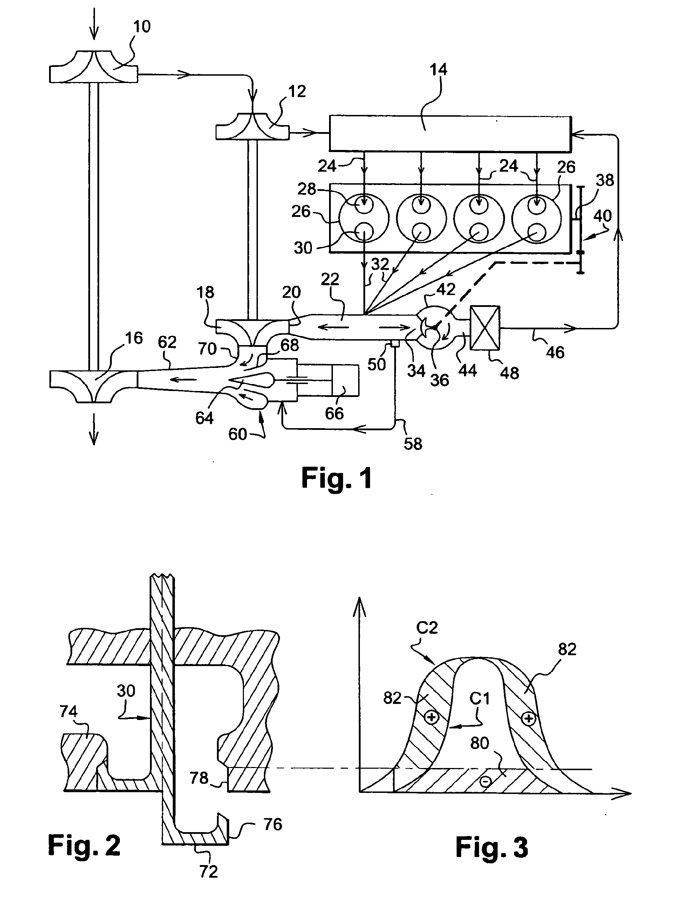

Le moteur représenté schématiquement en figure 1 est un moteur Diesel à quatre cylindres fonctionnant selon un cycle à quatre temps essentiellement sur une plage de vitesses de rotation comprises entre 1000 et 4000 tours par minute environ, ce moteur étant suralimenté par une turbocompression à deux étages au moyen d'un compresseur basse pression 10 monté en série avec un compresseur haute-pression 12 pour alimenter en air un collecteur d'admission 14 du moteur, le compresseur basse-pression 10 étant entraîné en rotation par une turbine basse-pression 16 montée en série avec une turbine haute-pression 18 qui entraîne en rotation le compresseur haute-pression 12 et qui est alimentée en gaz d'échappement par une première sortie 20 d'un collecteur d'échappement 22.

Les compresseurs 10 et 12 sont par exemple des compresseurs centrifuges et les turbines 16 et 18 sont des turbines radiales à géométrie fixe.

Le collecteur d'admission 14 est relié par des conduits 24 à des orifices d'admission des cylindres 26 du moteur, ces orifices étant équipés de soupapes d'admission 28 commandées par un arbre à cames, et les orifices d'échappement des cylindres 26, équipés de soupapes d'échappement 30 commandées par un autre arbre à cames, sont reliés par des conduits 32 au collecteur d'échappement 22.

Ce collecteur comporte une seconde sortie 34, par exemple située à une extrémité du collecteur 22 opposée à l'extrémité comportant la première sortie 20, et qui est sélectivement fermée par un obturateur rotatif 36 entraîné par le vilebrequin 38 du moteur à une vitesse double de la vitesse de rotation du moteur, par exemple par une transmission à engrenages 40.

L'obturateur rotatif 36 tourne dans une chambre cylindrique 42 dans laquelle débouchent, d'une part, la seconde sortie 34 du collecteur d'échappement 22 et, d'autre part, l'entrée 44 d'un conduit 46 de recyclage de gaz d'échappement dont la sortie débouche dans le collecteur d'admission 14.

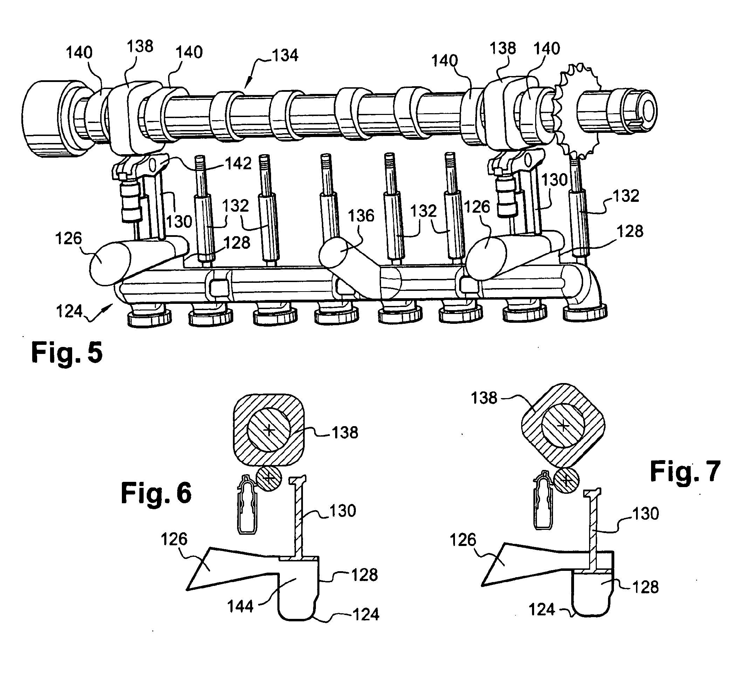

En variante, la seconde sortie 34 du collecteur 22 peut être équipée d'une ou de plusieurs soupapes d'ouverture et de fermeture commandées par l'arbre à cames des soupapes d'échappement 30, comme on le verra plus en détail en référence aux figures 5 à 7.

L'entrée 44 du conduit de recyclage 46 comporte une vanne de réglage de débit 48 pilotée par le système de commande du moteur.

Le collecteur d'échappement 22 comprend une troisième sortie 50 reliée par un conduit de dérivation 58 à un éjecteur 60 à alimentation réglable, monté dans le conduit 62 qui relie la sortie de la turbine haute-pression 18 à la volute d'entrée de la turbine basse pression 16.

Cet éjecteur est avantageusement du type décrit dans la demande de brevet français 2 891 011-A1 du demandeur et comprend un obturateur axial 64 de forme conique déplaçable, par un actionneur 66 piloté par le système de commande du moteur, dans un convergent conique 68 se rétrécissant vers l'aval. Ce convergent débouche axialement dans une tuyère 70 de forme convergente formée dans le conduit 62 à la sortie de la turbine haute-pression 18.

Le moteur qui vient d'être décrit fonctionne de la façon suivante :

L'air fourni par les compresseurs 10 et 12 est à une pression d'environ 4,5 bars, la température d'admission de l'air dans le moteur est d'environ 300°K, la température d'échappement étant d'environ 900°K et la pression totale dans les cylindres avant l'ouverture des soupapes d'échappement étant dans ces conditions égale à trois fois la pression d'admission. La pression dans le collecteur d'échappement doit être au moins égale à la pression d'admission pour assurer le recyclage d'une partie des gaz d'échappement vers le collecteur d'admission.

Pour une détente efficace de la charge gazeuse présente dans les cylindres à l'ouverture des soupapes d'échappement 30, la seconde sortie 34 du collecteur d'échappement 22 est fermée par l'obturateur 36 pendant une durée qui correspond à environ 60° de rotation du vilebrequin 38 à partir de l'ouverture des orifices d'échappement de chaque cylindre, c'est-à-dire un peu avant le point mort bas de chaque piston.

Cela permet d'envoyer à l'entrée de la turbine haute-pression 18 et à l'entrée de l'éjecteur 60 la première partie la plus comprimée de la charge gazeuse à quitter le cylindre, pendant le premier tiers environ de la période de vidange du cylindre.

Pour assurer un transfert rapide de la détente de cette charge depuis les orifices d'échappement jusqu'à la section critique de la turbine haute-pression 18, le volume du collecteur d'échappement 22, délimité par les soupapes d'échappement 30, l'entrée de la turbine haute-pression 18, la seconde sortie 34 du collecteur d'échappement, et l'éjecteur 60 a une valeur minimale juste suffisante pour une évacuation correcte de chaque cylindre, cette valeur étant sensiblement égale à 30% du volume d'un cylindre.

Le transfert de la détente des gaz d'échappement vers l'entrée de la turbine haute-pression 18 est d'autant plus rapide que la section débitante de cette turbine est faible vis-à-vis de celle des orifices d'échappement du cylindre à la pleine ouverture (elle est par exemple inférieure à 1/3 environ de la section des orifices d'échappement d'un cylindre à pleine ouverture).

Quant l'obturateur 36 ouvre la seconde sortie 34 du collecteur d'échappement, la partie finale de la charge gazeuse contenue dans le cylindre en cours de vidange alimente, à basse pression, à la fois la turbine haute-pression 18, le conduit 46 de recyclage de gaz d'échappement et l'éjecteur 60, pendant une durée correspondant approximativement aux deux derniers tiers de la période de vidange du cylindre.

Cela permet de maintenir une contre-pression élevée en aval du moteur quand les pistons sont au voisinage de leur point mort bas et de ramener cette contre-pression à un niveau voisin de la pression d'admission pendant les courses de refoulement des pistons. On peut ainsi alimenter la turbine haute-pression 18 et la turbine basse pression 16 à une pression supérieure à la pression d'admission sans créer de fortes pertes de rendement par pompage pendant les transvasements.

Pour accélérer la vitesse d'ouverture des orifices d'échappement des cylindres, les têtes 72 des soupapes d'échappement 30 sont, dans leur position de fermeture, encastrées dans la culasse 74 du moteur, comme représenté en figure 2.

Pour cela, on donne une certaine hauteur aux rebords périphériques 76 des têtes de soupapes et on forme dans les orifices d'échappement des chambrages 78 d'une hauteur correspondante, dans lesquels ces rebords 76 sont encastrés de façon étanche dans la position de fermeture de l'orifice d'échappement.

Cela permet d'accélérer la soupape d'échappement sur une première partie de sa course avant l'ouverture réelle de l'orifice d'échappement.

Il en résulte une réduction de section débitante de cet orifice, que l'on a schématisée par la zone hachurée 80 du diagramme de la figure 3, qui représente la variation de cette section débitante en fonction de la rotation du vilebrequin. Dans ce diagramme, la courbe C1 correspond à la variation de cette section pour une soupape à tête non encastrée dans la culasse, tandis que la courbe C2 représente la variation de cette section pour une soupape à tête encastrée selon l'invention, le déplacement de cette soupape commençant un peu plus tôt et se terminant un peu plus tard que celui de la soupape classique non encastrée.

Cela se traduit par des augmentations de section, représentées par les zones hachurées 82, qui compensent la réduction de section représentée par la zone hachurée 80.

Le taux de recyclage de gaz d'échappement dans le collecteur d'admission 14 peut atteindre des valeurs de 40 à 50%.

L'alimentation de l'éjecteur 60 par des gaz d'échappement à pression plus élevée permet d'entraîner le flux de gaz sortant de la turbine haute-pression 18 et d'augmenter la pression d'alimentation de la turbine basse-pression 16 sans augmenter pour autant la pression statique à la sortie de la turbine 18 et sans réduire le taux de détente de cette turbine.

L'actionneur 66 qui déplace axialement l'obturateur 64 de l'éjecteur 60 permet de piloter le taux de recyclage des gaz d'échappement dans le moteur. En effet, lorsque le conduit de recyclage est complètement ouvert, une ouverture de l'éjecteur 60 se traduit par une augmentation du volume d'air fourni par les compresseurs 10, 12 au collecteur d'admission 14 et par une réduction correspondante du volume de gaz d'échappement recyclé dans le collecteur d'admission. Si cette réduction du taux de recyclage des gaz d'échappement n'est pas suffisante, l'obturateur 64 étant dans une position de pleine ouverture de l'éjecteur 60, la fermeture de la vanne 48 permet de poursuivre l'augmentation du débit d'air par accroissement de la pression d'alimentation des turbines.

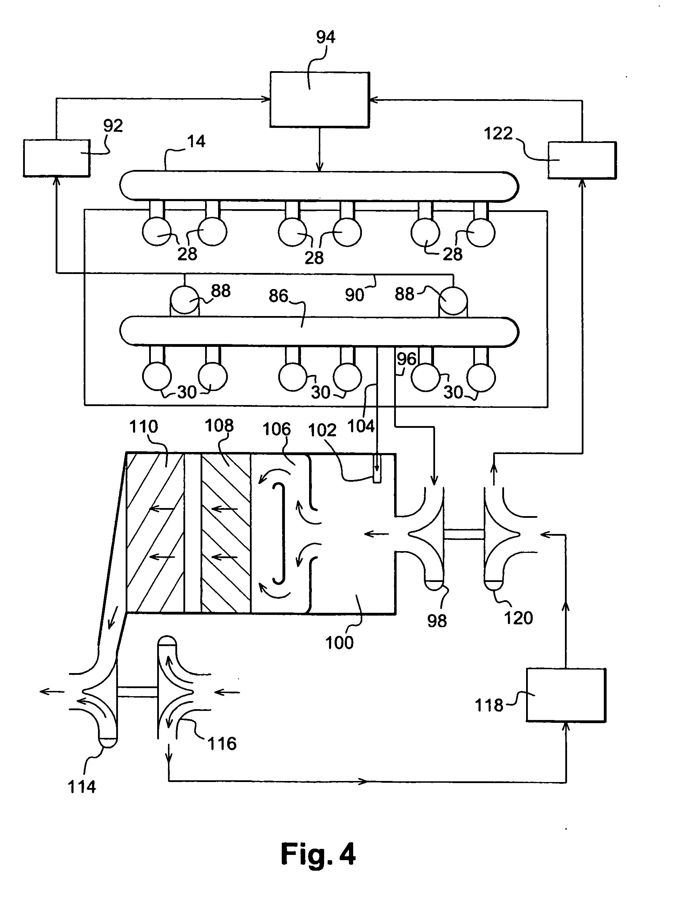

Dans la variante de réalisation de la figure 4, le moteur comprend une ligne de trois cylindres qui est équipée d'un groupe de turbocompression à deux turbines haute-pression et basse-pression et deux compresseurs haute-pression et basse-pression, respectivement.

Ce type de moteur à trois cylindres par turbine est mieux adapté à la mise en oeuvre de l'invention qu'un moteur à quatre cylindres par turbine, dans lequel l'onde de pression d'un cylindre intervient juste avant la fermeture d'un autre cylindre qui subit un reflux de gaz brûlé pour le cycle suivant, ce qui dégrade le rendement de remplissage.

Chaque cylindre du moteur de la figure 4 est alimenté par un collecteur d'admission 14 et comprend deux soupapes d'admission 28 et deux soupapes d'échappement 30. Les orifices d'échappement des trois cylindres de la rangée débouchent directement dans un collecteur d'échappement 86 comprenant au voisinage de ses extrémités deux sorties 88 équipées de soupapes d'obturation et reliées par un conduit 90 de recyclage de gaz d'échappement équipé d'un échangeur de refroidissement 92 à un mélangeur 94 alimentant le collecteur d'admission 14.

Le collecteur d'échappement 86 comprend de plus une sortie intermédiaire 96 raccordée à l'entrée d'une turbine haute-pression 98 dont la sortie alimente une entrée axiale d'une chambre de centrifugation 100 du type décrit dans le document WO 2006/082302-A1. Cette chambre de centrifugation est de forme cylindrique et comprend une entrée tangentielle perpendiculaire à son axe, équipée d'une tuyère convergente réglable 102 alimentée par une autre sortie intermédiaire 104 du collecteur d'échappement. La sortie axiale de la chambre de centrifugation est reliée par un diffuseur radial annulaire 106 à un catalyseur d'oxydation cylindrique 108 à écoulement axial, qui est suivi d'un filtre à particules 110 également cylindrique à écoulement axial.

La chambre de centrifugation, le catalyseur 108 et le filtre à particules 110 peuvent être logés dans une même enceinte cylindrique dont la sortie 112 alimente une turbine basse-pression 114 qui entraîne en rotation un compresseur basse-pression 116.

La sortie du compresseur 116 est reliée, par un conduit équipé d'un échangeur de refroidissement 118, à l'entrée d'un compresseur haute-pression 120 entraîné en rotation par la turbine haute-pression 98.

La sortie du compresseur haute-pression 120 est reliée, par un conduit équipé d'un échangeur de refroidissement 122, au mélangeur 94 qui alimente le collecteur d'admission 14.

Dans cette configuration, le flux de gaz d'échappement qui alimente la chambre de centrifugation 100 est fortement pulsé. Les pulsations de pression sont transformées en moment cinétique dans la chambre de centrifugation par la tuyère de détente 102. L'écoulement rotatif est ensuite recomprimé par le diffuseur radial pour alimenter le catalyseur, le filtre à particules et la turbine basse-pression par un flux à pression sensiblement constante supérieure à la pression statique à la sortie de la turbine haute pression. La chambre de centrifugation joue le même rôle que l'éjecteur 60 décrit en figure 1.

Par ailleurs, la disposition du catalyseur 108 et du filtre à particules 110 entre la turbine haute-pression 98 et la turbine basse-pression 114 a pour avantage que la température des gaz traités par le catalyseur est supérieure à celle régnant en aval de la turbine basse pression et qu'au débit maximal du moteur, le volume réduit des gaz sous pression qui traversent le filtre à particules permet d'en minimiser la perte de charge.

En variante, la chambre de centrifugation 100 peut se trouver en amont de la turbine haute-pression et alimenter cette turbine et son conduit de dérivation par l'intermédiaire du diffuseur radial annulaire 106, du catalyseur 108 et du filtre à particules 110.

Dans une autre variante, chaque sortie intermédiaire du collecteur d'échappement est reliée à une chambre de centrifugation qui alimente une turbine, haute pression ou basse pression respectivement.

Le collecteur d'échappement 86 de la figure 4 peut être intégré à la fonderie de la culasse du moteur, d'une seule pièce avec cette culasse.

Une telle réalisation est représentée en figure 5 dans le cas d'un moteur à une rangée de quatre cylindres en ligne. Dans cette figure, on a représenté, pour plus de clarté, le volume intérieur du collecteur d'échappement sans la culasse du moteur, ainsi que les soupapes d'échappement avec leur arbre à cames.

Le collecteur d'échappement 124 de la figure 5 a une longueur sensiblement égale à celle de la rangée de soupapes et est à section réduite, son volume étant minimal et inférieur à celui d'un cylindre, comme déjà indiqué plus haut en référence à la figure 1.

Il comprend à ses extrémités deux sorties 126 reliées au conduit 90 de recyclage des gaz d'échappement, chacune de ces sorties étant reliée au collecteur par un bossage ou dôme 128 dans lequel est montée une soupape 130 appelée soupape de recyclage dans ce qui suit, qui est commandée par le même arbre à cames 134 que les soupapes d'échappement 132.

Le collecteur d'échappement 124 comprend également deux sorties intermédiaires 136, dont une seule a été représentée sur le dessin, qui sont semblables aux sorties intermédiaires de la figure 4.

Chaque soupape de recyclage 130 se trouve entre les deux soupapes d'échappement 132 d'un cylindre d'extrémité de la rangée et est actionnée par une came 138 à quatre lobes à 90° pour 4 cylindres et à 3 lobes à 120° pour 3 cylindres portée par l'arbre 134, entre les deux cames 140 de commande des soupapes d'échappement 132 du cylindre d'extrémité. Cette came 138 agit sur un linguet 142 monté entre un point fixe et l'extrémité supérieure de la soupape de recyclage 130. Les soupapes de recyclage sont en position de fermeture lors de l'ouverture des orifices d'échappement et sont en position d'ouverture avant la fermeture des orifices d'échappement.

Les positions d'ouverture et de fermeture d'une soupape de recyclage sont représentées schématiquement aux figures 6 et 7 où l'on voit que la soupape 130 ouvre et ferme respectivement un orifice 144 de communication entre le dôme 128 du collecteur et sa sortie 126. Grâce à cette disposition, il est inutile de prévoir un siège d'étanchéité pour la soupape de recyclage 130, ce qui simplifie la réalisation du collecteur et optimise la vitesse d'ouverture et de fermeture de l'orifice 144.

Les deux soupapes de recyclage 130 aux extrémités du collecteur sont actionnées en synchronisme, de sorte que chaque cylindre se vidange simultanément vers les deux extrémités du collecteur. Cela permet de réduire à un minimum le volume du collecteur d'échappement, dont la section est déterminée pour le débit d'une seule soupape d'échappement, soit la moitié du flux refoulé par le piston d'un cylindre.

Ce collecteur peut bien entendu équiper également le moteur de la figure 1, l'une de ses sorties intermédiaires étant reliée à l'entrée de la turbine haute-pression et l'autre sortie intermédiaire au conduit de dérivation 58 équipé de l'éjecteur 60.

## Revendications

1. Moteur à combustion interne à quatre temps suralimenté à turbocompresseur, comprenant un collecteur d'échappement (22) dont une sortie (20) est reliée à l'entrée d'une turbine (18) entraînant un compresseur (12) d'alimentation du moteur en air sous pression, **caractérisé en ce que** le collecteur d'échappement (22) comprend au moins une seconde sortie (34) équipée de moyens d'obturation (36) actionnés en synchronisme avec la rotation du vilebrequin du moteur pour fermer cette seconde sortie (34) lors de l'ouverture des orifices d'échappement des cylindres (26) du moteur et pour l'ouvrir avant la fermeture desdits orifices d'échappement.

2. Moteur selon la revendication 1, **caractérisé en ce que** l'ouverture de la ou de chaque seconde sortie (34) du collecteur d'échappement par les moyens d'obturation (36) a lieu à 60° environ de rotation du vilebrequin après l'ouverture des orifices d'échappement.

3. Moteur selon la revendication 1 ou 2, **caractérisé en ce que** la durée de la fermeture de la ou de chaque seconde sortie (34) du collecteur d'échappement par les moyens d'obturation (36) est réglable.

4. Moteur selon l'une des revendications 1 à 3, **caractérisé en ce que** le volume du collecteur d'échappement (22) est sensiblement égal à 30% du volume d'un cylindre (26) du moteur.

5. Moteur selon l'une des revendications 1 à 4, **caractérisé en ce que** la section débitante de la turbine (18) est inférieure à 1/3 environ de la section totale des orifices d'échappement d'un cylindre à leur pleine ouverture.

6. Moteur selon l'une des revendications précédentes, **caractérisé en ce que** les moyens d'obturation (36) comprennent un élément rotatif entraîné par le vilebrequin ou des soupapes actionnées par l'arbre à cames du moteur.

7. Moteur selon l'une des revendications précédentes, **caractérisé en ce que**, en position de fermeture des orifices d'échappement, les têtes (72) des soupapes d'échappement sont encastrées dans la culasse (74) du moteur pour être accélérées avant l'ouverture des orifices d'échappement.

8. Moteur selon l'une des revendications précédentes, **caractérisé en ce que** la seconde sortie (34) du collecteur d'échappement est reliée au collecteur d'admission (14) du moteur par un conduit (46) de recyclage de gaz d'échappement.

9. Moteur selon l'une des revendications précédentes, **caractérisé en ce que** le collecteur d'échappement comprend une troisième sortie reliée à la sortie de la turbine (18) par un conduit de dérivation (58) équipé d'une soupape de régulation de débit (60).

10. Moteur selon l'une des revendications précédentes, **caractérisé en ce que** la turbine (18) précitée est une turbine haute-pression dont la sortie alimente une turbine basse-pression (16) d'entraînement d'un compresseur basse-pression (10) monté en série avec le compresseur (12) précité, qui est un compresseur haute-pression.

11. Moteur selon l'ensemble des revendications 9 et 10, **caractérisé en ce que** la turbine basse-pression (16) est alimentée en gaz d'échappement par un éjecteur (60) relié à la troisième sortie du collecteur d'échappement (22).

12. Moteur selon l'ensemble des revendications 9 et 10, **caractérisé en ce que** la troisième sortie est reliée à une tuyère de détente réglable (102) débouchant tangentiellement dans une chambre de centrifugation (100) alimentée axialement par la sortie de la turbine haute pression (18) et alimentant la turbine basse pression (114) via un diffuseur radial annulaire (106).

13. Moteur selon la revendication 12, **caractérisé en ce que** la sortie du diffuseur radial annulaire (106) est reliée à l'entrée de la turbine basse pression (114) via un catalyseur (108) et le cas échéant un filtre à particules (110).

14. Moteur selon l'une des revendications précédentes, **caractérisé en ce que** l'entrée (44) du conduit (46) de recyclage des gaz d'échappement comprend une vanne de réglage de débit (48).

15. Procédé de commande du taux de recyclage de gaz d'échappement et de la richesse de combustion dans un moteur du type décrit dans l'une des revendications précédentes, ce moteur comprenant un collecteur d'échappement (22) dont une première sortie (20) alimente au moins une turbine (18), dont une seconde sortie (34) est reliée par des moyens d'obturation (36) d'une part à un conduit (46) de recyclage de gaz d'échappement dont l'entrée est équipée d'une vanne de réglage de débit (48), et dont une troisième sortie est reliée à la sortie de la turbine (18) par un conduit de dérivation (58) équipé d'une vanne de régulation de débit (60), ce procédé étant **caractérisé en ce qu'**il consiste, le conduit (46) de recyclage de gaz d'échappement étant complètement ouvert, à réduire le taux de recyclage de gaz d'échappement à l'admission du moteur par ouverture de ladite vanne de régulation (60) et, si nécessaire, la vanne de régulation étant à pleine ouverture, à fermer le conduit de recyclage (46) au moyen de la vanne de réglage (48).

## Claims

1. Turbocharger supercharged four-stroke internal combustion engine, comprising an exhaust manifold (22) of which one outlet (20) is connected to the intake of a turbine (18) driving a compressor (12) supplying the engine in air under pressure, **characterised in that** the exhaust manifold (22) comprises at least one second outlet (34) provided with sealing means (36) actuated in synchronism with the rotation of the crankshaft of the engine in order to close this second outlet (34) during the opening of the exhaust ports of the cylinders (26) of the engine and in order to open it before the closing of said exhaust ports.

2. Engine according to claim 1, **characterised in that** the opening of the or of each second outlet (34) of the exhaust manifold by the sealing means (36) takes place at approximately 60° of rotation of the crankshaft after the opening of the exhaust ports.

3. Engine according to claim 1 or 2, **characterised in that** the duration of the closing of the or of each second outlet (34) of the exhaust manifold by the sealing means (36) is adjustable.

4. Engine according to one of the claims 1 to 3, **characterised in that** the volume of the exhaust manifold (22) is substantially equal to 30% of the volume of a cylinder (26) of the engine.

5. Engine according to one of the claims 1 to 4, **characterised in that** the section feeding the turbine (18) is less than approximately 1/3 of the total section of the exhaust ports of a cylinder when fully opened.

6. Engine according to one of the preceding claims, **characterised in that** the sealing means (36) comprise a rotative element driven by the crankshaft or valves driven by the camshaft of the engine.

7. Engine according to one of the preceding claims, **characterised in that**, in the closed position of the exhaust ports, the heads (72) of the exhaust valves are embedded in the cylinder head (74) of the engine in order to be accelerated before the opening of the exhaust ports.

8. Engine according to one of the preceding claims, **characterised in that** the second outlet (34) of the exhaust manifold is connected to the intake manifold (14) of the engine by an exhaust gas recycling conduit (46).

9. Engine according to one of the preceding claims, **characterised in that** the exhaust manifold comprises a third outlet connected to the outlet of the turbine (18) by a by-pass conduit (58) provided with a flow regulator valve (60).

10. Engine according to one of the preceding claims, **characterised in that** the aforementioned turbine (18) is a high-pressure turbine of which the outlet supplies a low-pressure turbine (16) driving a low-pressure compressor (10) mounted in series with the aforementioned compressor (12), which is a high-pressure compressor.

11. Engine according to all of the claims 9 and 10, **characterised in that** the low-pressure turbine (16) is supplied with exhaust gas by an ejector (60) connected to the third outlet of the exhaust manifold (22).

12. Engine according to all of the claims 9 and 10, **characterised in that** the third outlet is connected to an adjustable expansion nozzle (102) opening tangentially into a centrifugation chamber (100) feeded axially by the outlet of the high-pressure turbine (18) and feeding the law-pressure turbine (114) by an annular radial diffuser (106).

13. Engine according to claim 12, **characterised in that** the output of the annular radial diffuser (106) is connected to the intake of the low-pressure turbine (114) by an oxidation catalyst (108) and, where appropriate, by a particle filter (110).

14. Engine according to one of the preceding claims, **characterised in that** the intake (44) of the exhaust gas recycling conduit (46) comprises a flow regulator valve (48).

15. Method for controlling the rate of the exhaust gas recycling and of the combustion ratio in an engine of the type described in one of the preceding claims, this engine comprising an exhaust manifold (22) of which a first outlet (20) supplies at least one turbine (18), of which a second outlet (34) is connected by sealing means(36) to an exhaust gas recycling conduit (46) of which the intake is provided with a flow regulator valve (48), and of which a third outlet is connected to the outlet of the turbine (18) by a by-pass conduit (58) provided with a flow regulator valve (60), this method being **characterised in that** it consists, the exhaust gas recycling conduit (46) being fully opened, in reducing the rate of exhaust gas recycling at the intake of the engine by opening of said regulator valve (60) and, as required, the regulator valve being fully opened, in closing the recycling conduit (46) by means of the regulator valve (48).

## Patentansprüche

1. Viertakt-Verbrennungsmotor mit Aufladung durch einen Turbokompressor, umfassend einen Abgassammler (22), bei dem ein Ausgang (20) mit dem Eingang einer Turbine (18) verbunden ist, die einen Kompressor (12) zur Versorgung des Motors mit Druckluft antreibt, **dadurch gekennzeichnet, dass** der Abgassammler (22) mindestens einen zweiten Ausgang (34) umfasst, der mit Verschlussmitteln (36) versehen ist, die synchron mit der Kurbelwellendrehung des Motors betätigt werden, um diesen zweiten Ausgang (34) beim Öffnen der Abgasauslässe der Zylinder (26) des Motors zu verschließen und ihn vor dem Schließen dieser Abgasauslässe zu öffnen.

2. Motor nach Anspruch 1, **dadurch gekennzeichnet, dass** das Öffnen des oder jedes der zweiten Ausgangs/Ausgänge (34) des Abgassammlers durch die Verschlussmittel (36) bei ungefähr 60° der Kurbelwellendrehung nach Öffnen der Abgasauslässe stattfindet.

3. Motor nach Anspruch 1 oder 2, **dadurch gekennzeichnet, dass** die Dauer des Verschlusses des oder jedes der zweiten Ausgangs/Ausgänge (34) des Abgassammlers durch die Verschlussmittel (36) regelbar ist.

4. Motor nach einem der Ansprüche 1 bis 3, **dadurch gekennzeichnet, dass** das Volumen des Abgassammlers (22) im Wesentlichen gleich 30 % des Volumens eines Zylinders (26) des Motors ist.

5. Motor nach einem der Ansprüche 1 bis 4, **dadurch gekennzeichnet, dass** der Auslassquerschnitt der Turbine (18) kleiner als ungefähr 1/3 des Gesamtquerschnitts der Abgasauslässe eines Zylinders bei vollständiger Öffnung ist.

6. Motor nach einem der vorhergehenden Ansprüche, **dadurch gekennzeichnet, dass** die Verschlussmittel (36) ein drehbares Element, das durch die Kurbelwelle angetrieben ist, oder von der Nockenwelle des Motors betätigte Ventile umfassen.

7. Motor nach einem der vorhergehenden Ansprüche, **dadurch gekennzeichnet, dass** in der Verschlussposition der Abgasauslässe die Teller (72) von Abgasventilen im Zylinderkopf (74) des Motors versenkt sind, wobei sie vor dem Öffnen der Abgasauslässe beschleunigt werden.

8. Motor nach einem der vorhergehenden Ansprüche, **dadurch gekennzeichnet, dass** der zweite Ausgang (34) des Abgassammlers mit einem Einlasssammler (14) des Motors durch eine Abgas-Rückführleitung (46) verbunden ist.

9. Motor nach einem der vorhergehenden Ansprüche, **dadurch gekennzeichnet, dass** der Abgassammler einen dritten Ausgang umfasst, der mit dem Ausgang der Turbine (18) durch einen Bypasskanal (58) verbunden ist, der mit einem Durchflussregulationsventil (60) versehen ist.

10. Motor nach einem der vorhergehenden Ansprüche, **dadurch gekennzeichnet, dass** die genannte Turbine (18) eine Hochdruckturbine ist, deren Auslass eine Niederdruck-Antriebsturbine (16) für einen Niederdruckkompressor (10) speist, der dem genannten Kompressor (12) vorgeschaltet ist, der ein Hochdruckkompressor ist.

11. Motor nach einem der Ansprüche 9 und 10, **dadurch gekennzeichnet, dass** die Niederdruckturbine (16) durch eine mit dem dritten Ausgang des Abgassammlers (22) verbundene Düse (60) mit Abgas gespeist wird.

12. Motor nach einem der Ansprüche 9 und 10, **dadurch gekennzeichnet, dass** der dritte Ausgang mit einer regelbaren Entlastungsdüse (102) verbunden ist, die tangential in eine Zentrifugierkammer (100) mündet, die axial durch den Ausgang der Hochdruckturbine (18) gespeist wird und die Niederdruckturbine (114) über einen ringförmigen Radialdiffusor (106) speist.

13. Motor nach Anspruch 12, **dadurch gekennzeichnet, dass** der Ausgang des ringförmigen Radialdiffusors (106) mit dem Eingang der Niederdruckturbine (114) über einen Katalysator (108) und gegebenenfalls einen Partikelfilter (110) verbunden ist.

14. Motor nach einem der vorhergehenden Ansprüche, **dadurch gekennzeichnet, dass** der Eingang (44) der Abgas-Rückführleitung (46) ein Durchflussregelungsventil (48) umfasst.

15. Verfahren zum Steuern der Abgasrückführungsrate und der Verbrennungsgemischzusammensetzung in einem Motor von der in einem der vorhergehenden Ansprüche beschriebenen Art, wobei der Motor einen Abgassammler (22) umfasst, bei dem ein erster Ausgang (20) mindestens eine Turbine (18) speist, bei dem ein zweiter Ausgang (34) über Verschlussmittel (36) einerseits mit einer Abgas-Rückführleitung (46) verbunden ist, deren Eingang mit einem Durchflussregelungsventil (48) versehen ist, und bei dem ein dritter Ausgang mit dem Ausgang der Turbine (18) durch einen Bypasskanal (58) verbunden ist, der mit einem Durchflussregulationsventil (60) versehen ist, wobei das Verfahren **dadurch gekennzeichnet ist, dass** es umfasst, wenn die Abgas-Rückführleitung (46) vollständig geöffnet ist, Verringern der Abgasrückführungsrate zum Motoreinlass durch Öffnen des Regulationsventils (60) und, falls nötig, wenn das Regulationsventil ganz offen ist, Schließen der Rückführleitung (46) mittels des Regelungsventils (48).
